# EUROPEAN PATENT APPLICATION

(11) **EP 3 363 932 A1**
(43) Date of publication of application: **22.08.2018**
(21) Application number: 18156876.7
(22) Date of filing: 15.02.2018
(51) Int. Cl.: C25B 11/02, C25B 9/06, G01N 21/67, G01N 21/69

(54) **ELECTROLYSIS DEVICE**

(30) Priority: 16.02.2017 JP 2017026678
(71) Applicant: ARKRAY, Inc., Minami-ku Kyoto-shi, Kyoto 601-8045 (JP)
(72) Inventor: KASAI, Tokuo, Kyoto-shi, Kyoto 602-0008 (JP)
(74) Representative: Dehns

(57) **Abstract**

An electrolysis device (1) comprising a cell (10) containing a solution (60), a pair of electrodes installed in the cell (10), and a voltage application device (50) connected to the pair of electrodes. One electrode of the pair of electrodes is a smaller electrode (20), and another electrode of the pair of electroeds is a larger electrode (30). An area of a liquid-contacting portion (21) of the smaller electrode (20) with the solution (60) is smaller than an area of a liquid-contacting portion of the larger electrode (30) with the solution (60). In a state in which the solution (60) is contained in the cell (10), only the solution (60) is present between the liquid-contacting portion (21) of the smaller electrode (20) and a liquid surface (61) of the solution (60) vertically above the liquid-contacting portion (21) of the smaller electrode (20).

## Description

### BACKGROUND

### Technical Field

The present invention relates to an electrolysis device in which a pair of electrodes make contact with a solution contained in the device.

### Related Art

During electrolysis, bubbles are generated from electrodes when anions (for example, chlorine ions) which donate electrons to a positive electrode, or cations (for example, hydrogen ions) which receive electrons from a negative electrode, become gaseous molecules. Normally, the bubbles rise toward the surface of the solution and are released into the atmosphere. However, depending on the structure of the electrodes, sometimes bubbles stay on the surface of the electrode. This decreases a surface area of the electrode that makes contact with the solution, and sometimes obstructs the reaction from proceeding. In particular, when the electrode is small compared to a volume of a gas generated, i.e., when a small quantity of specimen solution is analyzed in a reaction system in which a pair of electrodes are provided in a minute cell having a volume less than 1 cm³, due to minute diameters of the electrodes, the progress of electrochemical reactions is seriously obstructed by the generated bubbles staying on the electrodes. This is a problem that needs to be considered when unitizing plasma spectrometry analysis instruments as disclosed, for example, in JP 2016-130734 A.

Note that, although the disclosure of JP 2013-257147 A makes reference to prevention of obstruction of electrochemical reactions due to bubbles generated from electrodes adhering to ion-sensitive films, the technology therein does not consider the adherence of bubbles to electrodes.

Exemplary embodiments of the present invention are related to preventing bubbles from adhering to an electrode in an electrolysis device.

### SUMMARY

An electrolysis device according to the present disclosure includes a cell containing a solution, a pair of electrodes installed in the cell, and a voltage application device connected to the pair of electrodes. One electrode out of the pair of electrodes is a small electrode and the other is a large electrode. A liquid-contacting portion of the small electrode, which is a portion of the small electrode that makes contact with the solution has a smaller area than an surface area of a liquid-contact portion of the large electrode, which is a portion of the large electrode that makes contact with the solution. Moreover, only the solution is present between the liquid-contacting portion of the small electrode and a liquid surface of the solution vertically above the liquid-contacting portion of the small electrode in a state in which the solution is contained in the cell. Note that the word "vertically" mentioned herein means a direction of gravity, or a direction perpendicular to a horizontal plane.

In the electrolysis device according to the present disclosure, there is no structure at all present vertically above the liquid-contacting portion of the small electrode in the solution, other than the solution itself. Any bubbles arising due to the reaction accordingly rise directly to the liquid surface of the solution, and do not stay on the small electrode or on any other structure (for example, the large electrode). This enables the prevention of obstruction of electrochemical reactions caused by bubbles from the reaction staying on the surface of an electrode, or caused by a reduction in the effective surface area of an electrode surface area.

### BRIEF DESCRIPTION OF THE DRAWINGS

Certain preferred embodiments will now be described by way of example only and with reference to the accompanying figures in which:
Fig. 1A is a schematic see-through perspective view of relevant portions of an electrolysis device according to an exemplary embodiment of the present invention, and Fig. 1B is a schematic cross-section of Fig. 1A, taken along line I-I;
Fig. 2A is a schematic cross-section illustrating an outline of a concentration process in plasma spectroscopy analysis using the electrolysis device of Fig. 1A, and Fig. 2B is a schematic cross-section illustrating an outline of a detection process in plasma spectroscopy analysis using the electrolysis device of Fig. 1A;
Fig. 3A and Fig. 3D are schematic diagrams illustrating examples of unsuitable installation orientations for a smaller electrode, and Fig. 3B, Fig. 3C, and Fig. 3E are schematic diagrams illustrating examples of suitable installation orientations for a smaller electrode.
Fig. 4A is a schematic diagram of an example of unsuitable positional relationships between electrodes, and Fig. 4B to Fig. 4D are schematic diagrams illustrating examples of suitable positional relationships between electrodes;
Figs. 5A to 5D are schematic diagrams each illustrating an example of a shape of an end edge of an insulator at a tip end of a smaller electrode; and
Fig. 6A is a graph illustrating results of a comparative example of plasma spectroscopy analysis using the electrolysis device according to an exemplary embodiment of the present invention, and Fig. 6B is a graph illustrating results of an exemplary embodiment of plasma spectroscopy analysis using the electrolysis device according to an exemplary embodiment of the present disclosure.

### DETAILED DESCRIPTION

A first aspect of an electrolysis device according to the present disclosure includes, as stated above, a cell containing a solution, a pair of electrodes installed in the cell, and a voltage application device connected to the pair of electrodes. One electrode out of the pair of electrodes is a smaller electrode and another electrode of the pair of electrodes is a larger electrode. The liquid-contacting portion of the smaller electrode, which is a portion of the smaller electrode that makes contact with the solution has a smaller area than an area of a liquid-contacting portion of the larger electrode, which is a portion of the larger electrode that makes contact with the solution. Moreover, only the solution is present between the liquid-contacting portion of the smaller electrode and a liquid surface of the solution vertically above the liquid-contacting portion of the smaller electrode in a state in which the solution is contained in the cell.

This means that there is no structure of the electrolysis device at all (for example, the larger electrode) present vertically above the liquid-contacting portion of the smaller electrode in the solution, other than the solution itself. The liquid-contacting portion mentioned herein is a material portion of the smaller electrode that makes contact with the solution, thereby electrons are actually transferred between the electrode and ions in the solution. For example, in cases in which there is a structure (for example, an insulator) covering and protecting the material forming the smaller electrode, the portion projecting from the structure and actually making contact with the solution is the liquid-contacting portion. Thus in such cases, suppose that there were, for example, to be an end edge of the structure present at a boundary between the structure and the projecting portion of the smaller electrode, then this would mean that no part of the end edge at all must be present vertically above the liquid-contacting portion. For example, in cases in which the smaller electrode including such an end edge is installed facing downward with respect to a horizontal plane, then such an end edge would be present vertically above the vicinity of the base of the smaller electrode, and so the present aspect of this disclosure would not adopt such an installation position. The reason therefor is that there would be a possibility of bubbles generated by the smaller electrode staying at the end edge.

Preferably, a part of the smaller electrode is covered by an insulator, a portion of the smaller electrode exposed from the insulator is the liquid-contacting portion of the smaller electrode, and the smaller electrode is installed so that an end edge of the insulator at the liquid-contacting portion is perpendicular to the liquid surface of the solution or faces upward facing.

In other words, for example, in cases in which the smaller electrode projects out perpendicular to an end edge of the insulator, the smaller electrode is installed so as to face any direction from parallel to the liquid surface of the solution (namely, to a horizontal plane) to vertically upward. Due to the smaller electrode being installed in this manner, the end edge is not positioned vertically above the liquid-contacting portion of the smaller electrode, and so bubbles do not stay at the end edge.

Preferably, the larger electrode is installed at a position other than vertically above the smaller electrode.

Namely, no portion at all of the larger electrode is present vertically above the smaller electrode. Thus, when bubbles generated from the smaller electrode rise vertically upward, the bubbles do not stay due to not making direct contact with the larger electrode.

Preferably, the electrolysis device includes a light-transmissive portion that is provided in an outer wall of the cell in a vicinity of a tip end of the smaller electrode, and that is transmissive to light from the cell to outside, and a light receiver that is disposed outside the light-transmissive portion and receives light transmitted through the light-transmissive portion. The electrolysis device is configured such that a charge carrying detection substance is included in the solution contained in the cell, that the detection substance is concentrated in the cell at the smaller electrode by applying a voltage from the voltage application device across the pair of electrodes, that plasma is generated at the smaller electrode by applying a higher voltage from the voltage application device across the pair of electrodes than the voltage when concentrating the detection substance, and that luminescence of the detection substance generated by the plasma is detectable by the light receiver through the light-transmissive portion.

An electrolysis device as described above is, for example, employable in a plasma spectrometry analysis method. Such a plasma spectrometry analysis method includes a concentration process and a detection process. In the concentration process, a voltage is applied to the smaller electrode in the presence of the solution, serving as a sample, so as to concentrate the detection substance in the solution at least in the vicinity of the smaller electrode. In the detection process, plasma is generated by applying a higher voltage across the pair of electrodes than during the concentration process, and luminescence of the detection substance generated by the plasma is detected. This analysis method includes the concentration process and the detection process, and there are no particular limitations to any other processes or conditions.

In this analysis method, the solution may, for example, be a liquid specimen, or may be a diluent of a solid specimen that has been, for example, suspended, dispersed, or dissolved in a medium. A neat solution of the specimen may, for example, be employed as it is as the liquid specimen, or the neat solution may be employed with a medium as the liquid specimen, for example, in a diluent in which the neat solution of the specimen is suspended, dispersed, or dissolved in the medium. So long as the medium is able to suspend, disperse, or dissolve the specimen, there are no particular limitations thereto, and examples of the medium include water and buffers. Examples of the specimen include specimens (samples) taken from biological bodies, environmental specimens (samples), metals, chemical substances, pharmaceutical products, and so on. There are no particular limitations to specimens taken from biological bodies, and examples thereof include urine, blood, hair, saliva, sweat, nails, and the like. The blood specimen may, for example, be erythrocytes, whole blood, serum, blood plasma, or the like. Examples of the biological body include a human, a non-human animal, a plant, or the like. The non-human animal may, for example, be a mammal other than a human, a reptile, an amphibian, a fish, an insect, or the like. The environmental specimen is not particularly limited, and examples thereof include food, water, soil, the atmosphere, an air sample, or the like. Examples of the food include fresh foods, and processed foods. Examples of the water include drinking water, underground water, river water, sea water, household effluent, and the like.

There are no particular limitations to the detection substance so long as the detection substance has electric charge, and examples of the detection substance include metals, chemical substances, and the like. The metal is not particularly limited, and examples of the metal include aluminum (Al), antimony (Sb), arsenic (As), barium (Ba), beryllium (Be), bismuth (Bi), cadmium (Cd), caesium (Cs), gadolinium (Gd), lead (Pb), mercury (Hg), nickel (Ni), palladium (Pd), platinum (Pt), tellurium (Te), thallium (Tl), thorium (Th), tin (Sn), tungsten (W), and uranium (U). Examples of the chemical substance include reagents, agricultural chemicals, and cosmetics. There may, for example, be a single type or two or more types of the detection substance.

In cases in which the detection substance is a metal, the liquid may, for example, include a reagent for separating the metal in the specimen. Examples of the reagent include chelating agents, masking agents, and the like. Examples of the chelating agent include dithizone, tiopronin, meso-2,3-dimercaptosuccinic acid (DMSA), sodium 2,3-dimercapto-1-propane sulfonate (DMPS), ethylenediaminetetraacetic acid (EDTA), nitrilotriacetic acid (NTA), ethylenediamine-N,N'-disuccinic acid (EDDS), and alpha lipoic acid. "Masking" in an analysis method mentioned herein deactivating the reactivity of SH groups, and may, for example, be performed by chemically modifying SH groups. Examples of the masking agent include maleimide, N-methylmaleimide, N-ethylmaleimide, N-phenylmaleimide, maleimidopropionic acid, iodoacetamide, and iodoacetic acid.

The liquid may, for example, be a liquid that regulates pH. The pH in such cases is not particularly limited so long as it is a pH that is conducive to detection of the detection substance. The pH of the liquid can, for example, be regulated by a pH-regulating reagent that is an alkaline reagent, an acid reagent, or the like.

Examples of the alkaline reagent include alkalis and aqueous solutions of alkalis. The alkali is not particularly limited, and examples include sodium hydroxide, lithium hydroxide, potassium hydroxide, and ammonia. Examples of the aqueous solutions of alkalis include aqueous solutions in which alkali is diluted by water or a buffer. The concentration of the alkali in the alkaline aqueous solution is not particularly limited, and may, for example, be from 0.01 mol/L to 5 mol/L.

Examples of the acid reagent include acids and aqueous solutions of acids. The acid is not particularly limited, and examples include hydrochloric acid, sulfuric acid, acetic acid, boric acid, phosphoric acid, citric acid, malic acid, succinic acid, and nitric acid. Examples of the acid aqueous solutions include aqueous solutions in which acid is diluted by water or a buffer. The concentration of acid in the acid aqueous solution is not particularly limited, and may, for example, be from 0.01 mol/L to 5 mol/L.

The electrodes are solid electrodes, and specific examples thereof include rod electrodes. The material of the electrodes is not particularly limited, and as long as the material is a solid, conductive material, the material can be appropriately set according to the type of the detection substance, for example. The material of the electrodes may, for example, be a non-metal, may be a metal, or may be a mixture thereof. When the material of the electrodes includes a non-metal, then the material of the electrodes may, for example, include one type of non-metal, or may include two or more types of non-metal. Examples of the non-metal include carbon. When the material of the electrodes includes a metal, the material of the electrodes may, for example, include one type of metal, or may include two or more types of metal. Examples of the metal include gold, platinum, copper, zinc, tin, nickel, palladium, titanium, molybdenum, chromium, and iron. When the material of the electrodes includes two or more types of metal, the material of the electrodes may be an alloy. Examples of the alloy include brass, steel, INCONEL (registered trademark), Nichrome, and stainless steel. The pair of electrodes may, for example, be the same material or may be different materials.

The sizes of the electrodes are not particularly limited, as long as at least a portion of each of the electrodes can be placed in the cell and an area of the liquid-contacting portion of the smaller electrode is smaller than that of the larger electrode. Note that in cases in which the cell is, for example, to be made into a cartridge to enable mass production, the size of the cell is preferably made as small as possible. In such cases, the area of the liquid-contacting portion of the smaller electrode in the electrolysis device according to each of the above aspects is preferably from 0.01 mm² to 6 mm². More specifically, in cases in which the liquid-contacting portion of the smaller electrode is formed in a circular pillar shape with a diameter and a length of 0.05 mm, the area of the liquid-contacting portion is about 0.01 mm². Moreover, in cases in which the liquid-contacting portion thereof is formed in a circular pillar shape with a diameter of 1.0 mm and a length of 1.66 mm, the area of the liquid-contacting portion is about 6 mm². In consideration of the above circumstances, in cases in which the shape of the liquid-contacting portion of the smaller electrode is a circular pillar shape, the diameter thereof is preferably from 0.05 mm to 1.0 mm (and more preferably 0.1 mm) and the length thereof is preferably 0.05 mm to 1.66 mm (and more preferably 0.5 mm).

The concentration process, as stated above, is a process in which a voltage is applied across the pair of electrodes in the presence of a liquid so as to concentrate the detection substance in the liquid at least in the vicinity of the smaller electrode. The pair of electrodes are in contact with the liquid. In the concentration process, the vicinity of the smaller electrode is not particularly limited, and examples thereof include a region where plasma is generated in a detection process, described later, for example the surface of the smaller electrode.

In the concentration process, for example, some of the detection substance in the solution may be concentrated in the vicinity of the smaller electrode, or all of the detection substance may be concentrated in the vicinity of the smaller electrode.

In the concentration process, the charge condition of the electrode is preferably set such that the detection substance concentrates at the electrode used to detect the detection substance in a detection process, described later, namely, the electrode where plasma is generated (also referred to as the "plasma generation electrode" hereinafter). The charge condition is not particularly limited; however, in cases in which the detection substance has positive charge, such as a metal ion, the plasma generation electrode may be set with a current direction from the voltage application device such that the plasma generation electrode becomes the negative electrode in the concentration process. On the other hand, in cases in which the detection substance has negative charge, the plasma generation electrode may be set with a current direction from the voltage application device such that the plasma generation electrode becomes the positive electrode.

The concentration of the detection substance can, for example, be adjusted using the voltage. Thus, the voltage to generate the concentration (referred to as the "concentration voltage" hereinafter) can be appropriately set by a person of ordinary skill in the art. The concentration voltage is, for example, 1mV or more, and is preferably 400 mV or more. The upper limit of the concentration voltage is not particularly limited. The concentration voltage may be fixed, or may fluctuate, for example. The concentration voltage may, for example, be a voltage at which plasma is not generated.

The duration over which the concentration voltage is applied is not particularly limited, and may be appropriately set according to the concentration voltage. The duration of concentration voltage application is, for example, from 0.2 minutes to 40 minutes, and is preferably from 5 minutes to 20 minutes. The voltage applied across the pair of electrodes may, for example, by applied continuously, or may be applied intermittently. An example of the intermittent application is pulse application. In cases in which the voltage application is intermittent, the duration of concentration voltage application may, for example, be a total duration of the time the concentration voltage is applied, or may be a total duration of the time the concentration voltage is applied and the time the concentration voltage is not applied.

A voltage application device that applies the voltage across the pair of electrodes is not particularly limited. Any known device such as a voltage source may be employed therefor as long as it is capable of applying a voltage across the pair of electrodes. In the concentration process, the current flowing between the electrodes may, for example, be set to 0.01 mA to 200 mA, is preferably set to 10 mA to 60 mA, and is more preferably set to 10 mA to 40 mA.

In the detection process, as stated above, plasma is generated by applying a higher voltage across the pair of electrodes than during the concentration process, and luminescence of the detection substance generated by the plasma is detected.

The direction of current in the detection process may be the same direction as that of the direction of current in the concentration process. However, the voltage application device is preferably configured so as to be capable of switching the direction of current when applying voltage, and the direction of the current when generating plasma is preferably the opposite direction to the direction of current when concentrating the detection substance.

More specifically, in cases in which the detection substance has a positive charge in the concentration process, in the detection process, the current direction from the voltage application device is preferably set so as to make the plasma generation electrode the positive electrode. On the other hand, in cases in which the detection substance has a negative charge, the voltage application device is preferably set with a current direction in the detection process that makes the plasma generation electrode the negative electrode.

The detection process may be performed so as to be contiguous to the concentration process, or may be non-contiguous thereto. The detection process of the former case is a detection process performed as soon as the concentration process ends. The detection process of the latter case is a detection process performed within a predetermined time from when the concentration process ends. The predetermined time is, for example, from 0.001 seconds to 1000 seconds after the concentration process, and is preferably from 1 second to 10 seconds thereafter.

In the detection process, "generating plasma" mentioned herein means generating plasma at a practical level, and, more specifically, with regard to detection of plasma emission, means causing plasma to be generated that gives a practically detectable level of luminescence. As a specific example, this may be said to be a level at which plasma emission is detectable by a plasma emission detector.

The generation of plasma at a practical level can be adjusted by, for example, the voltage. Thus the voltage to cause plasma to be generated so as to give a practically detectable luminescence (also referred to as the "plasma generation voltage" hereinafter) can be appropriately set by a person of ordinary skill in the art. The plasma generation voltage is, for example, 10 V or greater, and is preferably 100 V or greater. There is no particular limitation to the upper limit thereof. The plasma generation voltage is, for example, a relatively high voltage compared to a voltage used to cause the concentration. Thus, the plasma generation voltage is preferably a higher voltage than the concentration voltage. The plasma generation voltage may be fixed, or may fluctuate, for example.

The duration over which the plasma generation voltage is applied for is not particularly limited, and may be appropriately set according to the plasma generation voltage. The duration over which the plasma generation voltage is applied may, for example, be from 0.001 seconds to 0.02 seconds, and is preferably from 0.001 seconds to 0.01 seconds. The voltage application across the pair of electrodes may, for example, by continuous application, or may be intermittent application. An example of the intermittent application is pulse application. In cases in which the voltage application is intermittent, the duration of plasma generation voltage application may, for example, be the duration of one time of the plasma generation voltage application, may be the total duration of the time the plasma generation voltage is applied, or may be the total duration of the time the plasma generation voltage is applied and the time the plasma generation voltage is not applied.

In the detection process, the luminescence of the generated plasma may be detected continuously or may be detected intermittently, for example. Examples of the luminescence detection include detection of the presence or absence of luminescence, detection of the intensity of the luminescence, detection of a particular wavelength, and detection of a spectrum. Examples of the detection of a particular wavelength include, for example, detection of a characteristic wavelength emitted by the detection substance during plasma emission. The method of detecting luminescence is not particularly limited and, for example, a known optical measurement instrument such as a charge coupled device (CCD) or a spectroscopy instrument may be utilized therefor.

The voltage application across the pair of electrodes in the detection process is performed by the voltage application device employed in the concentration process, and can be performed at a higher voltage and preferably with the opposite direction to the current direction thereof. In the detection process, the current across the electrodes may be set, for example, to 0.01 mA to 100000 mA, and is preferably set to 50 mA to 2000 mA.

The analysis method may further include a computation process in which a concentration of a detection substance in the solution is computed from the detection results of the detection process. Examples of the detection results include the intensity of the luminescence, as described above. In the computation process, the concentration of the detection substance may, for example, be computed based on detection results, and correspondence relationships between detection results and concentrations of the detection substance in the solution. Such correspondence relationships may be found, for example, by taking standard samples of known concentrations of the detection substance, and plotting detection results obtained by the analysis method against the concentrations of the detection substance of the standard samples. The standard samples are preferably a dilution series of the detection substance. A high degree of reliability can be achieved by performing such computations.

In the analysis method, the pair of electrodes may be placed inside the cell that has been configured to include a transmissive portion. In such cases, the luminescence may be detected in the detection process by a light receiver disposed so as to be capable of receiving luminescence emitted by the detection substance and passes through the transmissive portion.

In the analysis method, due to employing the electrolysis device of the present disclosure, any bubbles (for example, hydrogen gas) generated from the smaller electrode in the analysis process are not prevented from rising from the surface of the smaller electrode and do not stay thereon. Moreover, the bubbles that have risen do not stay on the larger electrode. Thus, any bubbles caused by electrochemical reactions do not interfere with the analysis process in the analysis method. This suppresses variation in measurement results and the like caused by bubbles, so that stable analysis results are obtained.

Description follows regarding exemplary embodiments of an electrolysis device of the present disclosure, with reference to the drawings. For ease of explanation, in these figures, the structure of each section is simplified as appropriate and illustrated schematically such that the dimensional ratios and so on of each section differ from their actual dimensional ratios.

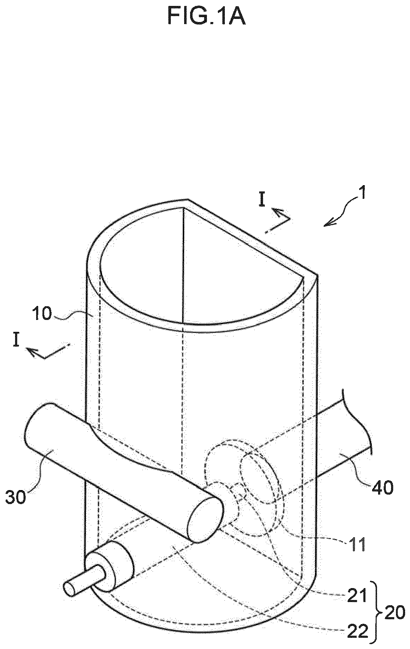

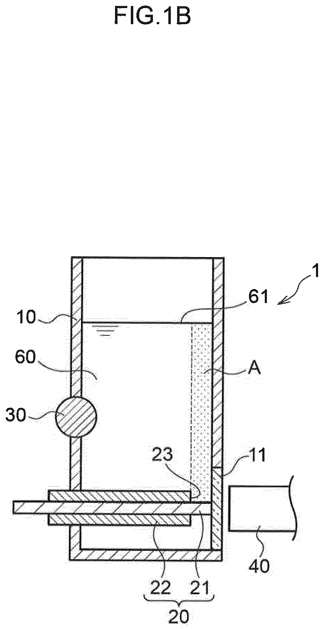

Fig. 1A is a schematic see-through perspective view of relevant portions of an electrolysis device 1 of an exemplary embodiment, and Fig. 1B is a schematic cross-section of Fig. 1A taken on line I-I. As illustrated in Fig. 1A and Fig. 1B, the electrolysis device 1 of the present exemplary embodiment includes a cell 10, a pair of electrodes (a smaller electrode 20 and a larger electrode 30), and a light receiver 40. The cell 10 exhibits a substantially cylindrical shape, having a portion of its side face as if truncated to form a flat face shape. A circular, light-transmissive portion 11 is included in the flat face portion. Luminescence generated by applying a voltage to the smaller electrode 20 and the larger electrode 30 passes through the light-transmissive portion 11, and the light receiver 40 is disposed outside the cell 10 so as to be capable of receiving the luminescence emitted by the detection substance. The smaller electrode 20 is disposed parallel to a liquid surface 61 of a solution 60, and a tip end of the smaller electrode 20 is disposed so as to abut the light-transmissive portion 11. The larger electrode 30 having a cylindrical shape is disposed with its side face portion in the side face of the cell 10 on a side of the cell 10 facing the circular light-transmissive portion 11, such that the larger electrode 30 intersects the vertical direction at right angles, and this portion of the larger electrode 30 is exposed to the interior of the cell 10. Namely, the length direction of the larger electrode 30 and the length direction of the smaller electrode 20 are at skew-line positions with respect to each other. The smaller electrode 20 is covered by an insulator 22. In the electrolysis device 1 of the present exemplary embodiment, the solution 60 containing the detection substance is introduced into the tube of the cell 10 such that the solution 60 makes contact with the smaller electrode 20 and the larger electrode 30.

In the present exemplary embodiment, most of the surface of the smaller electrode 20 is covered by the insulator 22. The portion not covered by the insulator 22 is a liquid-contacting portion 21 that projects out perpendicular to an end edge 23 of the insulator 22. The liquid-contacting portion 21 is parallel to the liquid surface 61 of the solution 60. There is no structure of the electrolysis device 1 at all, including the end edge 23 of the insulator 22, present at a portion in the solution 60 that is vertically above the liquid-contacting portion 21 (the region indicated by the reference sign "A" in Fig. 1B), other than the solution 60 itself. The surface area of the liquid-contacting portion 21 contacting the solution 60 is smaller than the exposed surface area of the larger electrode 30 inside the cell 10 and in contact with the solution 60.

In the present exemplary embodiment, the smaller electrode 20 and the light-transmissive portion 11 contact each other; however, the present embodiment is not limited thereto, and for example, the smaller electrode 20 may not make contact with the light-transmissive portion 11. The distance between the smaller electrode 20 and the light-transmissive portion 11 is not particularly limited, and may, for example, be from 0 cm to 0.5 cm.

The material of the light-transmissive portion 11 is not particularly limited, and may, for example, be set as appropriate according to the wavelength of the luminescence, so long as it is a material that transmits luminescence generated by applying voltage to the smaller electrode 20 and the larger electrode 30. Examples of the material of the light-transmissive portion 11 include quartz glass, acrylic resin (PMMA), borosilicate glass, polycarbonate (PC), cyclo-olefin polymer (COP), and polymethylpentene (TPX (registered trademark)). The size of the light-transmissive portion 11 is not particularly limited, so long as it is a size that enables transmission of luminescence generated by applying voltage to the smaller electrode 20 and the larger electrode 30.

In the present exemplary embodiment, the cell 10 is a bottomed cylindrical shape having a portion of its side face truncated to form a flat face shape running along its length direction; however, the shape of the cell 10 is not limited thereto, and may be any desired shape. The material of cell 10 is not particularly limited, and examples include acrylic resin (PMMA), polypropylene (PP), polyethylene (PE), polyvinyl chloride (PVC), polyethylene terephthalate (PET), and polystyrene (PS). In cases in which the cell 10 has a bottomed tube shape, the diameter of the cell 10 is, for example, from 0.3 cm to 1 cm, and the height of the cell 10 is, for example, from 0.9 cm to 5 cm. Into the cell 10 is introduced 0.3 cm³ to 0.8 cm³ of the solution 60.

The light receiver 40 is not particularly limited, and examples include known optical measurement instruments such as CCDs, spectroscopy instruments, and so on. The light receiver 40 may, for example, be a transmitter that transmits the generated luminescence to the optical measurement instrument disposed outside the electrolysis device 1. Examples of the transmitter include a transmission path such as an optical fiber.

The method of manufacturing the cell 10 is not particularly limited and the cell 10 may be a molded body manufactured by injection-molding or the like, or may be manufactured by forming a recess in a substrate such as a plate. The manufacturing method of the cell 10 is not particularly limited, and other examples thereof include lithography and machine cutting.

Explanation follows regarding a case in which metal ions (such as mercury ions, lead ions, etc.) present in the solution 60, serving as an acidic aqueous solution, are the detection substance, so as to summarize a spectroscopy analysis method employing the electrolysis device 1 of the present exemplary embodiment.

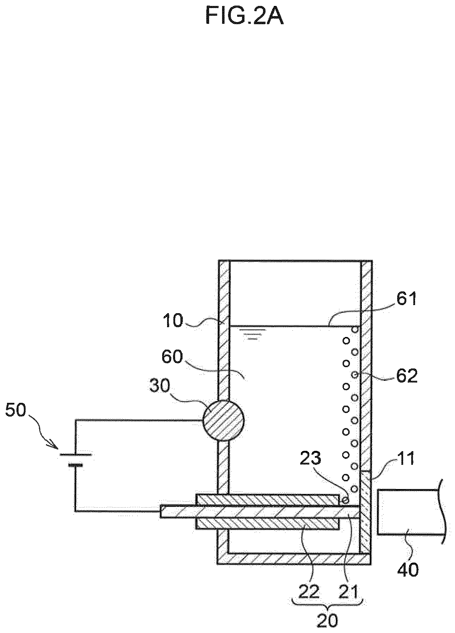

First, as the concentration process, in a state in which the solution 60 has been introduced into the cell 10, a voltage is applied by a voltage application device 50 such that the smaller electrode 20 acts as the cathode and the larger electrode 30 acts as the anode, as illustrated in Fig. 2A. Then, metal ions present in the solution 60 are attracted to the smaller electrode 20, this being the cathode. At the same time, hydrogen ions in the solution 60 are also attracted to the smaller electrode 20 and gain electrons there to form hydrogen gas, resulting in bubbles 62 arising from the smaller electrode 20.

There is no structure (that is, the larger electrode 30 or the end edge 23 of the insulator 22) at all present at a region in the solution 60 corresponding to vertically above the liquid-contacting portion 21 of the smaller electrode 20 (the region indicated by the reference sign "A" in Fig. 1B), other than the solution 60 itself. The generated bubbles 62 accordingly are not interfered with by any structure, quickly rise toward the liquid surface 61, and do not stay on the surface of the smaller electrode 20.

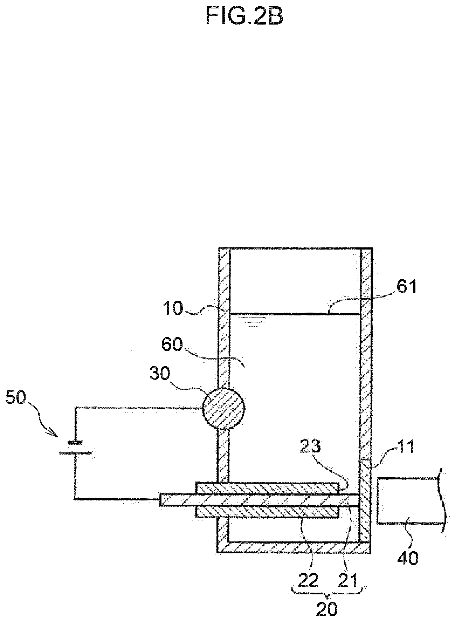

Next, as the detection process, a voltage is applied by the voltage application device 50 such that the smaller electrode 20 then acts as the anode and the larger electrode 30 acts as the cathode, as illustrated in Fig. 2B. Then, plasma is generated from the metal ions that were attracted around the smaller electrode 20 by the prior concentration process, and the light generated as a result passes through the light-transmissive portion 11 and is received and detected by the light receiver 40. Since the generated bubbles 62 generated in the prior concentration process do not stay on the surface of the smaller electrode 20, generation of plasma is not obstructed by such bubbles 62.

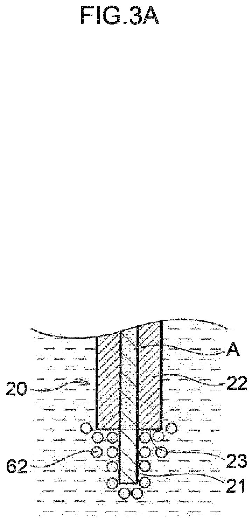

Supplementary explanation follows regarding the installation orientation of the smaller electrode 20 in the solution 60, based on Fig. 3A to Fig. 3E. Note that in Fig. 3A to Fig. 3E, the top of the figure is the liquid surface 61 side of the solution 60 (see Fig. 1B; the same applies below), and the larger electrode 30 is not present between the liquid-contacting portion 21 of the smaller electrode 20 and the liquid surface 61 (see Fig. 1B).

As illustrated in Fig. 3A, in a state in which the liquid-contacting portion 21 of the smaller electrode 20 is installed pointing directly downward with respect to the liquid surface 61, the end edge 23 of the insulator 22 also faces downward with respect to the liquid surface 61. In this state, the smaller electrode 20 itself is present in the region "A" vertically above the liquid-contacting portion 21. Thus, in this state, bubbles 62 stay at the end edge 23, and at least a portion of the liquid-contacting portion 21 is covered by the bubbles 62.

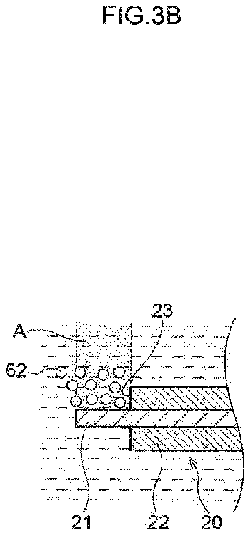

As illustrated in Fig. 3B, in a state in which the liquid-contacting portion 21 of the smaller electrode 20 is installed parallel to the liquid surface 61, the end edge 23 of the insulator 22 is perpendicular to the liquid surface 61. In this state, there is nothing present in the region "A" that is vertically above the liquid-contacting portion 21 up to the liquid surface 61, other than the solution 60 itself. Thus, in this state, the bubbles 62 are not impeded by anything, and rise vertically upward.

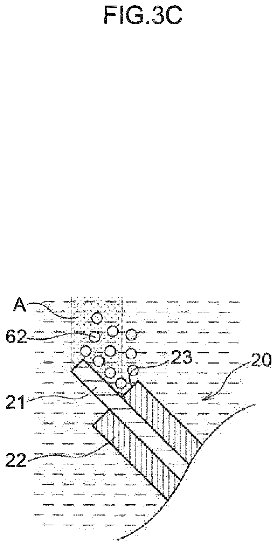

As illustrated in Fig. 3C, in a state in which the liquid-contacting portion 21 of the smaller electrode 20 is installed slanting upward with respect to the liquid surface 61, the end edge 23 of the insulator 22 also slants upward with respect to the liquid surface 61. Also in this state, there is nothing present in the region "A" vertically above the liquid-contacting portion 21 up to the liquid surface 61, other than the solution 60 itself. Thus, also in this state, the bubbles 62 are not impeded by anything, and continue to rise vertically upward.

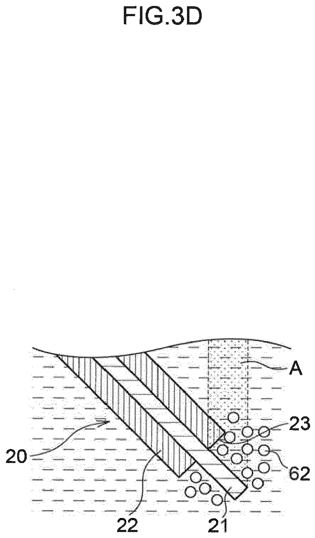

As illustrated in Fig. 3D, in a state in which the liquid-contacting portion 21 of the smaller electrode 20 is installed slanting downward with respect to the liquid surface 61, the end edge 23 of the insulator 22 also slants downward with respect to the liquid surface 61. In this state, a portion of the end edge 23 of the insulator 22 is caught up in the region "A" vertically above the liquid-contacting portion 21. Thus, in this state, the bubbles 62 stay at the end edge 23 caught up in the region "A", and at least a portion of the liquid-contacting portion 21 is covered by the bubbles 62.

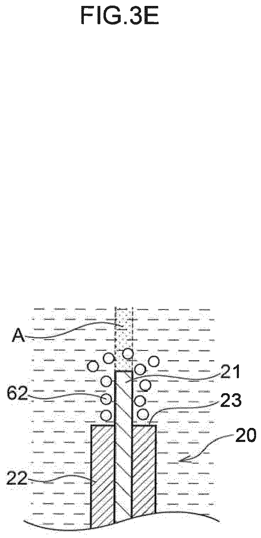

As illustrated in Fig. 3E, in a state in which the liquid-contacting portion 21 of the smaller electrode 20 is installed facing directly upward with respect to the liquid surface 61, the end edge 23 of the insulator 22 also faces upward with respect to the liquid surface 61. In this state, there is nothing present in the region "A" vertically above the liquid-contacting portion 21 and between the liquid-contacting portion 21 and the liquid surface 61, other than the solution 60. Thus, in this state, the bubbles 62 are not impeded by anything, and continue to rise vertically upward.

It is apparent from the above explanation that, as illustrated in Fig. 3B, Fig. 3C, and Fig. 3E, when the smaller electrode 20 is installed such that the end edge 23 of the insulator 22 faces any direction from perpendicular to the liquid surface 61 of the solution 60 to upward (including slanting upward), then the bubbles 62 arising at the liquid-contacting portion 21 of the smaller electrode 20 quickly rise vertically upward and do not obstruct the electrolytic reaction at the smaller electrode 20.

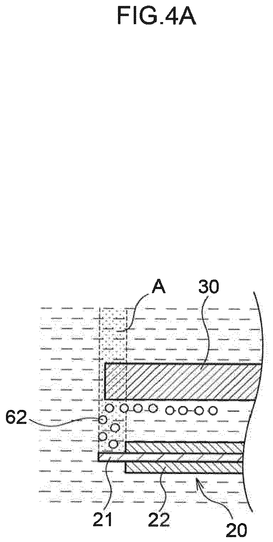

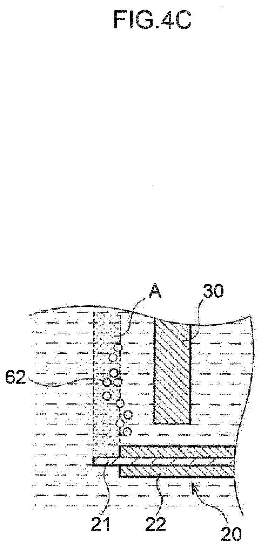

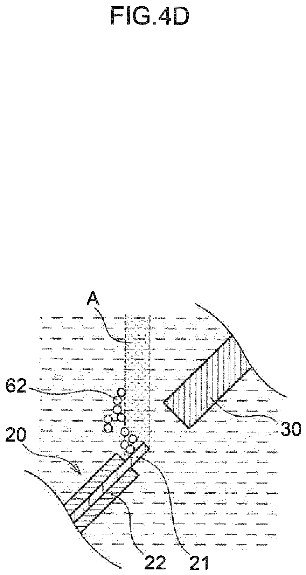

Next, supplementary explanation follows regarding the positional relationship of the smaller electrode 20 to the larger electrode 30 when the smaller electrode 20 is installed such that the end edge 23 of the insulator 22 faces any direction from perpendicular to the liquid surface 61 of the solution 60 to upward (including slanting upward), with reference to Fig. 4A to Fig. 4D.

As illustrated in Fig. 4A, when the larger electrode 30 is present in the region "A" vertically above the liquid-contacting portion 21 of the smaller electrode 20, the bubbles 62 stay at the lower side of the larger electrode 30, and there is a possibility that the bubbles 62 obstruct the electrochemical reactions at the larger electrode 30.

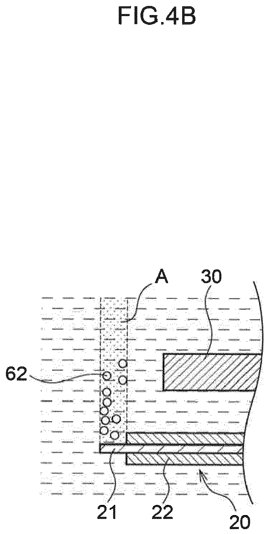

On the other side, when, as illustrated in Fig. 4B to Fig. 4D, the larger electrode 30 is not present in the region "A" vertically above the liquid-contacting portion 21 of the smaller electrode 20, the bubbles 62 do not stay at the lower side of the larger electrode 30, and the bubbles 62 accordingly do not obstruct the electrochemical reactions at the larger electrode 30.

Note that even in the case illustrated in Fig. 4A, the bubbles 62 do not stay at the lower side of the larger electrode 30 in cases in which the larger electrode 30 is outside of the region "A" in plan view, and in such cases the bubbles 62 accordingly do not obstruct the electrochemical reactions at the larger electrode 30.

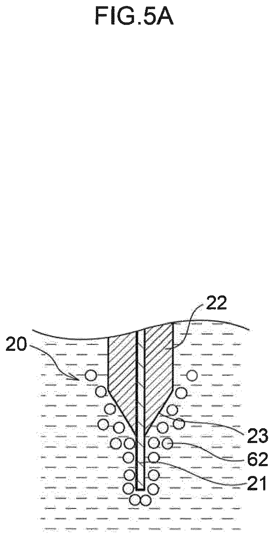

Supplementary explanation now follows regarding measures taken such that bubbles do not stay at the end edge 23 of the insulator 22 even in cases in which the liquid-contacting portion 21 of the smaller electrode 20 is installed facing downward (including slanting downward), with reference to Fig. 5A to Fig. 5D.

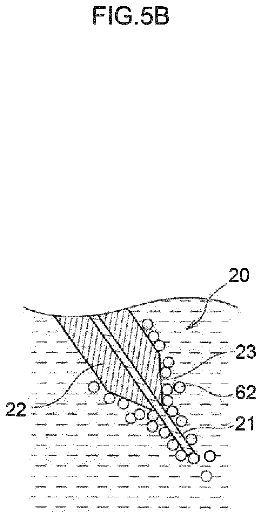

As illustrated in Fig. 5A, even in cases in which the liquid-contacting portion 21 of the smaller electrode 20 faces directly downward, forming the end edge 23 of the insulator 22 with a tapered shape enables the bubbles 62 to readily escape upward. When formed in such a shape, as illustrated in Fig. 5B, placing the liquid-contacting portion 21 of the smaller electrode 20 facing downward at an angle is effective in making the bubbles 62 less susceptible to contacting the end edge 23.

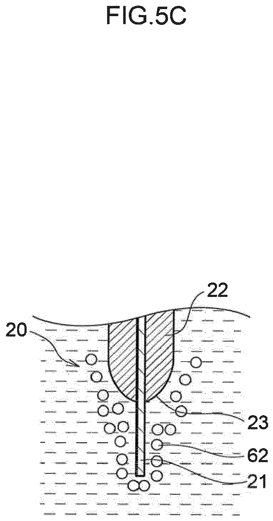

Moreover, as illustrated in Fig. 5C, when the liquid-contacting portion 21 of the smaller electrode 20 faces directly downward, forming the end edge 23 of the insulator 22 as a convex face enables the bubbles 62 to readily escape upward. However, there is still some concern that the bubbles 62 might stay in the vicinity of the boundary between the end edge 23 and the liquid-contacting portion 21 due to the end edge 23 being close to perpendicular to the liquid-contacting portion 21. In order that such a situation does not arise, when the insulator 22 is formed in a cylindrical shape, the radius of curvature of the convex face of the end edge 23 is preferably set to two or more times the radius of the insulator 22.

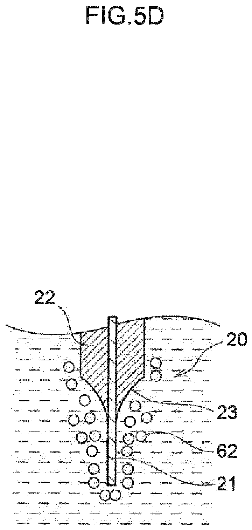

Moreover, as illustrated in Fig. 5D, when the liquid-contacting portion 21 of the smaller electrode 20 faces directly downward, forming the end edge 23 of the insulator 22 as a concave face also enables the bubbles 62 to readily escape upward. However, due to the end edge 23 being close to perpendicular to the side faces in the vicinity of the boundary between the end edge 23 and the side faces of the insulator 22, there is still some concern that the bubbles 62 might stay in this area. In order that such a situation does not arise, when the insulator 22 is formed in a cylindrical shape, the radius of curvature of the concave face of the end edge 23 is preferably set to two or more times the radius of the insulator 22.

Examples of the present invention will now be described. Note that the present invention is not limited to the following examples.

### Example 1

Confirmation was made that lead could be analyzed with good sensitivity using the electrolysis device of the present example.

### (1) Plasma Spectrometry Analysis Instrument

An analysis instrument of the present exemplary embodiment as shown above was prepared. Specifically, a bottomed tubular shaped cell 10 manufactured from transparent PMMA was prepared (height 28 mm × diameter (at maximum diameter portion) 7 mm). Quartz glass (diameter 4.5 mm, thickness 0.3 mm), serving as the light-transmissive portion 11, was disposed in the vicinity of the lower end of the flat face portion on the side face of the cell 10. The smaller electrode 20 and the larger electrode 30 were disposed in the cell 10. The smaller electrode 20 was disposed parallel to the liquid surface 61. The tip end of the smaller electrode 20 was disposed so as to contact the light-transmissive portion 11. The smaller electrode 20 employed a Nichrome wire with a diameter of 0.1 mm. The smaller electrode 20 employed was covered with a glass tube, serving as the insulator 22, over regions other than a region from a tip end of the smaller electrode 20 up to 0.5 mm from the tip end where the smaller electrode 20 was exposed. The larger electrode 30 employed was a carbon rod with a diameter of 4.0 mm. The larger electrode 30 was disposed with a portion of its side face in the side face of the cell 10 on a side of the cell 10 facing the circular light-transmissive portion 11, such that the larger electrode 30 intersected the vertical direction at a right angle, and this portion of the larger electrode 30 was exposed to the interior of the cell 10. Namely, the length direction of the larger electrode 30 and the length direction of the smaller electrode 20 were at skew-line positions with respect to each other. Moreover, an optical fiber, serving as the light receiver 40, was disposed so as to oppose the tip end of the smaller electrode 20 across the light-transmissive portion 11. The optical fiber employed had a 400 µm diameter single core. The optical fiber was connected to a concave grating type of spectrometer (not illustrated in the drawings).

### (2) Plasma Spectroscopy Analysis

Lead nitrate was dissolved at 100 ppb in 0.4 mL of a 2 mol/L solution of lithium hydroxide to give a lead sample as the solution 60. The lead sample was then introduced into the cell 10 of the electrolysis device.

Then first, as a concentration process, a voltage was applied across the smaller electrode 20 and the larger electrode 30 such that the smaller electrode 20 acted as the negative electrode (cathode) and the larger electrode 30 acted as the positive electrode (anode) (see Fig. 2A) under the following concentration conditions. Thereby lead in the solution 60 was concentrated in the vicinity of the smaller electrode 20.

### Concentration Conditions

| | |
|---|---|
| Applied Voltage: | 5V |
| Applied Current: | 10 mA to 60 mA |
| Current ON/OFF period: | 25 microseconds or greater |
| Current ON/OFF duty: | 50% to 80% |
| Application duration: | 300 seconds |

Immediately after concentrating, as the detection process, a further voltage was applied across the smaller electrode 20 and the larger electrode 30 such that current flowed with the smaller electrode 20 acting as the positive electrode and the larger electrode 30 acting as the negative electrode (see Fig. 2B) under the following plasma generation conditions. The intensity (count values) of luminescence was measured at each wavelength of the plasma emission thereby generated.

### Plasma Generation Conditions

| | |
|---|---|
| Applied Voltage: | 500V |
| Applied Current: | 1A |
| Applied Voltage Switching Period: | 50 microseconds |
| Applied Voltage Switching Duty: | 50% |
| Application duration: | 5 milliseconds |

Note that as a control (comparative example), the light-transmissive portion 11 was installed in the bottom face of the cell 10, and the smaller electrode 20 was installed facing directly downward (see Fig. 3A). With these exceptions, the concentration conditions and plasma generation conditions employed were similar, and the spectrum of the generated plasma emission was measured in a similar manner.

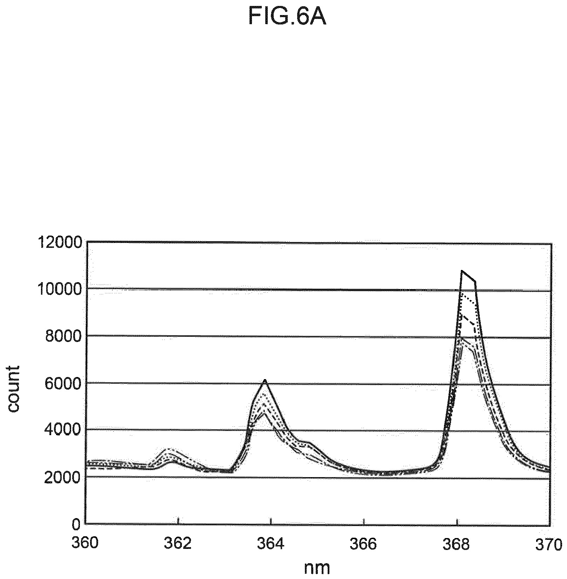

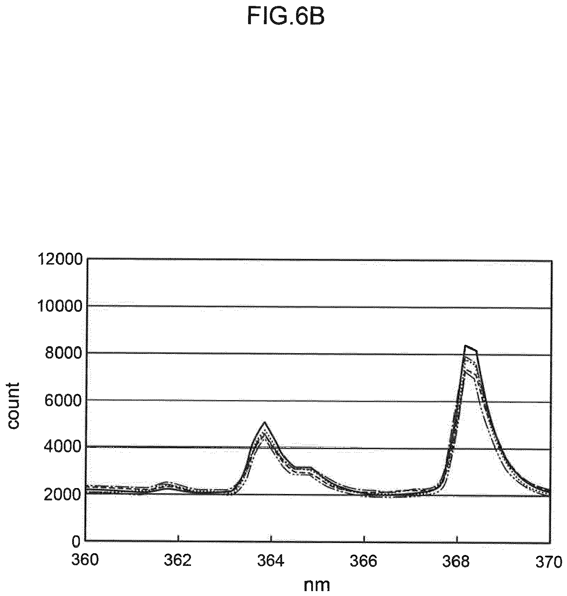

Results are illustrated in Fig. 6A and Fig. 6B. Fig. 6A and Fig. 6B are graphs illustrating measurement results of the spectrum in the vicinity of a lead peak which was measured five times for both the example and the comparative example. In Fig. 6A and Fig. 6B, the horizontal axis indicates the wavelength, and the vertical axis indicates the intensity (count value) of luminescence. Moreover, Fig. 6A illustrates the results of the comparative example, and Fig. 6B illustrates the results of the example.

These results apparently confirmed that, in comparison to the comparative example, the example showed a smaller variation in count values at a peak in the vicinity of 368.3 nm, this being the wavelength of plasma emission characteristic of lead.

Note that count values at this peak and the results of statistical processing based on these count values are listed in the following Table 1.

**Table 1**

| Example/ Comparative Example | Comparative Example | Example |
|---|---|---|
| Count Values | 10430 | 8238 |
| | 9425 | 7631 |
| | 8594 | 7615 |
| | 7626 | 7115 |
| | 7448 | 7018 |
| Average | 8705 | 7523 |
| Variance | 1250127 | 190568 |
| Standard Deviation | 1118 | 437 |
| F-test (P) | 0.096 | |
| Unequal Variances t-test (P) | 0.104 | |

First, an equal variance test (F-test) between the comparative example group and the example group, each containing five specimens, gave a significance level (P) of 0.096, and this exceeded P = 0.05. Thus, there was a statistically significant difference in the variances between the two groups. Namely, the fact that the variation (variance) in the comparative examples was clearly greater than the variation in the examples was also confirmed by the results of statistical processing. This difference in variation is hypothesized to be due to the orientation of the smaller electrode 20. Namely, in the comparative examples, the smaller electrode 20 faced directly downward, and the generated bubbles 62 stayed at the end edge 23 of the insulator 22 (see Fig. 3A). It is thought that variation arises in the count values due to the staying bubbles 62 covering the liquid-contacting portion 21 of the smaller electrode 20 according to the way in which the bubbles 62 stay. However, in the examples, the end edge 23 of the insulator 22 is perpendicular to the liquid surface 61 due to the smaller electrode 20 being parallel to the liquid surface 61. The bubbles 62 are not liable to stay at the end edge 23, and it is thought that the variation in the count values due to the bubbles 62 is accordingly smaller.

Moreover, an unequal variances t-test performed between the average value of the comparative examples (8705) and the average value of the examples (7523) showed the significance level (P) of 0.104, which exceeds P = 0.05. The result demonstrates a statistically significant difference between the average values. The bubbles 62 staying at the smaller electrode 20 might normally also have a larger effect on the average values representing plural measurement results, and therefore this suggests that there is also a possibility that they have an effect on the explanation and interpretation of these results.

### Industrial Applicability

The present invention may be utilized as an electrolysis device to execute electrochemical reactions in which bubbles are generated from electrodes. The present invention may accordingly be utilized as an electrolysis device employed for plasma spectroscopy analysis using minute cells that are highly influenced by bubbles from electrodes.

## Claims

1. An electrolysis device (1) comprising:
a cell (10) containing a solution (60);
a pair of electrodes installed in the cell (10); and
a voltage application device (50) connected to the pair of electrodes,
wherein one electrode of the pair of electrodes is a smaller electrode (20), and another electrode of the pair of electrodes is a larger electrode (30),
wherein a liquid-contacting portion (21) of the smaller electrode (20), which is a portion of the smaller electrode (20) that makes contact with the solution (60), has a smaller area than an area of a liquid-contacting portion of the larger electrode (30), which is a portion of the larger electrode (30) that makes contact with the solution (60), and
wherein only the solution (60) is present between the liquid-contacting portion (21) of the smaller electrode (20) and a liquid surface (61) of the solution (60) vertically above the liquid-contacting portion (21) of the smaller electrode (20) in a state in which the solution (60) is contained in the cell (10).

2. The electrolysis device (1) of claim 1, wherein:
a part of the smaller electrode (20) is covered by an insulator (22);
a portion of the smaller electrode (20) exposed from the insulator (22) is the liquid-contacting portion (21) of the smaller electrode (20); and
the smaller electrode (20) is installed so that an end edge of the insulator (22) at the liquid-contacting portion (21) is perpendicular to the liquid surface (61) of the solution (60) or faces upward.

3. The electrolysis device (1) of claim 1 or 2, wherein the larger electrode (30) is installed at a position other than vertically above the smaller electrode (20).

4. The electrolysis device (1) of any one of claims 1 to 3, further comprising:
a light-transmissive portion (11) that is provided in an outer wall of the cell (10), in a vicinity of a tip end of the smaller electrode (20), and that is transmissive to light from the cell (10) to outside; and
a light receiver (40) that is disposed outside the light-transmissive portion (11) and receives light transmitted through the light-transmissive portion (11),
wherein a charge carrying detection substance is included in the solution (60) contained in the cell (10),
wherein the detection substance is concentrated in the cell (10) at the smaller electrode (20) by applying a voltage from the voltage application device (50) across the pair of electrodes,
wherein plasma is generated at the smaller electrode (20) by applying a higher voltage from the voltage application device (50) across the pair of electrodes than the voltage when concentrating the detection substance, and
wherein luminescence of the detection substance generated by the plasma is detectable by the light receiver (40) through the light-transmissive portion (11).

5. The electrolysis device (1) of claim 4, wherein:
the voltage application device (50) is capable of switching a direction of current when applying voltage; and
a direction of current when generating plasma is an opposite direction to a direction of current when concentrating the detection substance.

6. The electrolysis device (1) of any one of claims 1 to 5, wherein the area of the liquid-contacting portion (21) of the smaller electrode (20) is from 0.01 mm² to 6 mm².
